# EUROPÄISCHE PATENTSCHRIFT

(11) **EP 0 419 893 B1**
(45) Veröffentlichungstag und Bekanntmachung des Hinweises auf die Patenterteilung: **25.01.1995**
(21) Anmeldenummer: 90116921.9
(22) Anmeldetag: 04.09.1990
(51) Int. Cl.: B65G 1/02, B66F 9/07

(54) **Lager- und Transportsystem**
Storage and transportation system
Système de stockage et de transport

(30) Priorität: 27.09.1989 DE 8911483 U
(43) Veröffentlichungstag der Anmeldung: 03.04.1991
(73) Patentinhaber: Robotech Logistiksysteme Ges.m.b.H., 6912 Hörbranz / Vlbg. (AT)
(72) Erfinder: Pillon, Hannes, Dr., A-6840 Götzis (AT); Volgger, Otmar, Dr., A-6858 Schwarzach (AT)
(74) Vertreter: Riebling, Peter, Dr.-Ing.

(56) Entgegenhaltungen:
- EP-B- 0 148 913
- DE-A- 3 150 817

## Beschreibung

Die Erfindung betrifft eine Lagergut-Transporteinrichtung, für den Transport von Lagergütern mittels eines schienenverfahrbar ausgebildeten Regalförderzeugs, mit parallelen Regalreihen und mit zwischen den Regalreihen angeordneten Regalgassen, wobei im Bereich der Regalgassen Weichen angeordnet sind, mit denen eine Schienenverbindung von einer Regalgasse zu einer benachbarten Regalgasse durch eine Aussparung in der die jeweiligen Regalgassen trennenden Regalreihe hindurch hergestellt wird.

Eine derartige Transporteinrichtung ist in der DE-A-3 150 817 beschrieben. Die Regalgassen werden dort über ein Schienensystem bedient, bei dem von einer Hauptversorgungsschiene rechtwinklig Schienen zur Versorgung der einzelnen Regalgassen abzweigen. Die hierbei vorgesehenen rechten Winkel im Bereich der Weichen verringern aber die Transportgeschwindigkeit, mit der die Regalförderzeuge die Weichen durchfahren können und damit praktisch die Transportgeschwindigkeit im gesamten Regalsystem. Auch wird durch die erwähnten rechten Winkel der Transport von Langgut erschwert.

Hiervon ausgehend liegt der Erfindung daher die Aufgabe zugrunde, eine derartige Lagergut-Transporteinrichtung vorzuschlagen, mit der auch Langgut kostensparend und schnell die Regalgasse wechseln kann.

Zur Lösung dieser Aufgabe ist die Erfindung dadurch gekennzeichnet, daß die weichen im Bereich der jeweiligen Regalgassen diagonal einander gegenüberliegend angeordnet sind und eine weichenverbindungsschiene diagonal durch die Aussparung in der Regalreihe geführt ist.

Das Regalförderzeug, welches von einer Regalgasse in die andere wechseln soll, fährt von der einen Regalgasse auf die Weiche, die die benachbarte Regalgasse diagonal verbindet, und gelangt von der Weiche auf die benachbarte Regalgasse. Damit ist ein schnelles und unter Vermeidung aufwendiger Geräte gewährleistetes Umsetzen des Regalförderzeugs von der einen Gasse in die andere gewährleistet.

Durch die Diagonalweiche können auch beliebig viele Regalgassen miteinander verbunden werden.

Die Weichen können auch zueinander diagonal in Art einer Kreuzweiche im Bereich einer Regalgasse angeordnet sein.

Von einer Zufahrts-Regalgasse können mehrere parallel dazu verlaufende Regalgassen über diagonal die Regalreihen durchgreifende Weichenverbindungen mit den diagonal dazu verlaufenden Verbindungsschienen erschlossen werden.

Die Erfindung wird im folgenden anhand mehrerer Ausführungsbeispiele näher erläutert. Dabei ergeben sich aus den Zeichnungen und ihrer Beschreibung weitere Vorteile und vorteilhafte Merkmale der Erfindung.
- Figur 1: zeigt ein erstes Lagersystem 1 mit parallel zueinander angeordneten Regalgassen 8,9,
- Figur 2: zeigt das Lagersystem nach Figur 1 in seitlicher Ansicht,
- Figur 3: zeigt in schematischer Darstellung diagonal einander gegenüberliegende Weichen im Bereich von Regalgassen,
- Figur 4: zeigt in einer weiteren Ausführungsform die Anordnung einer Kreuzungsweiche.

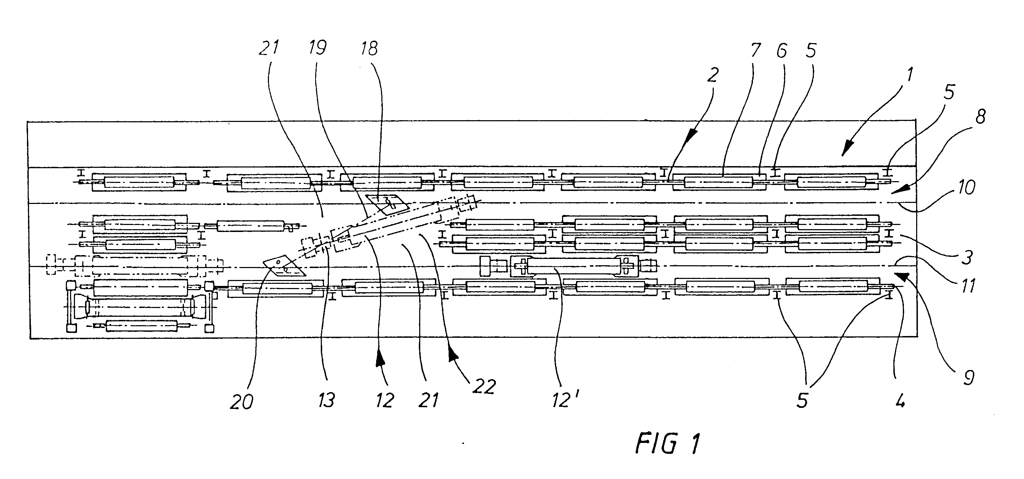

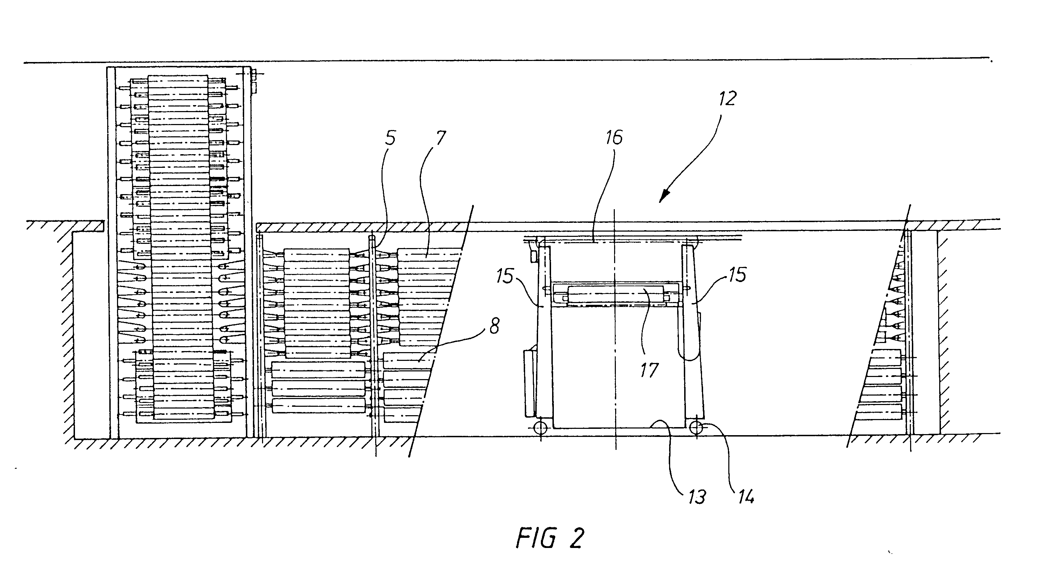

Die Regalgassen 8,9 werden nach Figur 1 seitlich begrenzt durch Regalreihen 2,4, wobei jede Regalreihe 2,4 im wesentlichen aus einem Regalsteher 6 (vergl. Figur 2) und darauf gelagertem Lagergut 6,7 besteht. Im gezeichneten Ausführungsbeispiel ist ein relativ langes Lagergut 6 in Kombintion mit einem kürzer ausgebildeten Lagergut 7 zusammen auf benachbarten Regalstehern gelagert. Im Ausführungsbeispiel nach Figur 1 ist ebenso gezeigt, daß zwischen den Regalgassen 8,9 Doppelreihen 3 aus doppelt angeordneten Regalreihen vorgesehen sein können.

Im Bereich jeder Regalgasse ist in an sich bekannter Weise eine Bodenfahrschiene und gemäß Figur 2 (nicht näher dargestellt) eine Deckenführungsschiene angeordnet. Zwischen diesen beiden Schienen bewegt sich das Regalförderzeug 12, wobei hinsichtlich der Regalgasse 9 lediglich die bodenseitige Bodenfahrschiene 11 noch dargestellt ist.

Das Regalförderzeug 12 besteht im wesentlichen aus einem Bodenfahrwerk 13 mit jeweils frontseitig und rückseitig angeordneten Drehschemeln, so daß dieses Regalförderzeug 12 auch Kurven fahren kann.

Gemäß Figur 2 ist auf den bodenseitigen Drehschemeln 14 jeweils ein Gerätemast 15 angeordnet, wobei zwischen benachbarten Gerätemasten 15 die Hubkabine 17 mit den nicht näher dargestellten Lastaufnahmemitteln ausgebildet ist.

Deckenseitig wird das Regalförderzeug 12 über ein Deckenfahrwerk 16 an einer nicht näher dargestellten Deckenfahrschiene geführt.

Gemäß der Ausführung nach Figur 1 ist zum Wechsel von einer Regalgasse 8 in die benachbarte Regalgasse 9 eine Weichenanordnung vorgesehen, die aus einer Weiche 18 im Bereich der Regalgasse 8, aus einer an der Weiche anschließenden Weichenschiene 19 und aus einer an dieser anschließenden Weiche 20 im Bereich der Regalgasse 9 besteht.

Es versteht sich von selbst, daß die genannte Weichenanordnung 18,19,20 auch im Bereich der Deckenfahrschiene (nicht näher dargestellt) angeordnet ist.

Zum Wechsel der Regalgasse fährt z. B. das in Figur 1 gezeigte Regalförderzeug von der Regalgasse 8 über die obere Weiche 18 auf die Weichenschiene 19 und gelangt dann über die untere Weiche 20 in die untere Regalgasse 9.

Wichtig ist, daß die mittlere Regalgasse (Doppelreihe 3) im Bereich dieser Weichen eine Aussparung 21 aufweist, durch welche der sogenannte Gangwechselbereich 22 definiert wird.

Die Aussparung 21 und damit der Gangwechselbereich 22 müssen in ihrer Länge so bemessen sein, daß das Regalförderzeug 12 ohne an den Regalreihen anzustoßen, von der einen Regalgasse in die andere gelangen kann.

In Figur 1 ist dargestellt, daß das Regalförderzeug 12 in der Regalgasse 9 seine Stellung 12' einnimmt.

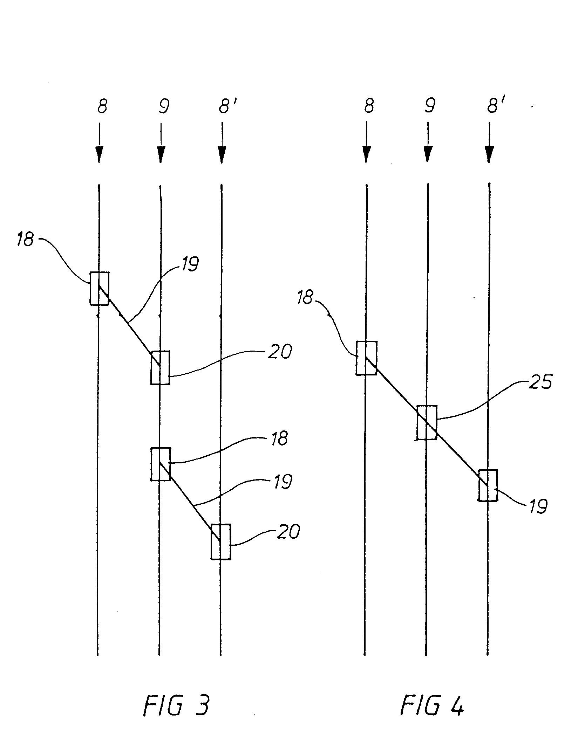

Figur 3 zeigt schematisiert ein weiteres Ausführungsbeispiel in Erweiterung des Ausführungsbeispieles nach Figur 1.

Dort ist gezeigt, daß nicht nur Zwei benachbarte Regalgassen über die gezeigte Weichenanordnung 18,19, 20 erschlossen werden können, sondern daß darüberhinaus auch über eine weitere Weichenanordnung 18,19,20 eine dritte Regalgasse 8' erschlossen werden kann. Dieses Beispiel ist beliebig fortsetzbar.

Ein abgewandeltes Ausführungsbeispiel zeigt Figur 4, wo ersichtlich ist, daß drei benachbarte Regalgassen 8,9,8' über eine als Kreuzweiche ausgebildete Weiche 25 erschlossen werden. Diese Kreuzweiche 25 kann in beliebigen Richtungen überfahren werden, so daß damit ausgehend von der mittleren Regalgasse 9 die beiden benachbarten Regalgassen 8,8' in beliebigen Richtungen erschlossen werden können.

## Patentansprüche

1. Lagergut-Transporteinrichtung für den Transport von Lagergütern mittels eines schienenverfahrbar ausgebildeten Regalförderzeugs, mit parallelen Regalreihen und mit zwischen den Regalreihen angeordneten Regalgassen (8,9), wobei im Bereich der Regalgassen (8,9) Weichen (18,20) angeordnet sind, mit denen eine Schienenverbindung von einer Regalgasse (8) zu einer benachbarten Regalgasse (9) durch eine Aussparung in der die jeweiligen Regalgassen (8,9) trennende Regalreihen (2) hindurch hergestellt wird, **dadurch gekennzeichnet**, daß die Weichen (18,20) im Bereich der jeweiligen Regalgassen (8,9) diagonal einander gegenüberliegend angeordnet sind und eine Weichenverbindungsschiene (19) diagonal durch die Aussparung (21) in der Regalreihe (2) geführt ist.

2. Lagergut-Transporteinrichtung nach Anspruch 1, **dadurch gekennzeichnet**, daß die Weichen zueinander diagonal in Art einer Kreuzungsweiche (25) im Bereich einer Regalgasse (9) angeordnet sind.

3. Lagergut-Transporteinrichtung nach Anspruch 1 oder 2, **dadurch gekennzeichnet**, das zwischen den Regalgassen (8,9) Doppelreihen (3) aus doppelt ausgebildeten Regalreihen (2,4) vorgesehen sind, wobei die Regalgassen (8,9) über Weichenverbindungen (18,20,25) und eine diagonal durch die Doppelreihe (3) hindurchführende Verbindungsschiene (19) miteinander verbunden sind.

## Claims

1. Warehouse goods transport device for the transport of warehouse goods by means of a rack conveying apparatus designed to run on rails, with parallel rows of racks and with rack lanes (8, 9) arranged between the rows of racks, wherein in the region of the rack lanes (8, 9) are arranged points (18, 20) with which a rail connection is made from one rack lane (8) to an adjacent rack lane (9) through an opening in the row of racks (2) separating the respective rack lanes (8, 9), characterised in that the points (18, 20) in the region of the respective rack lanes (8, 9) are arranged diagonally opposite each other and a points connecting rail (19) is directed diagonally through the opening (21) in the row of racks (2).

2. Warehouse goods transport device according to claim 1, characterised in that the points are arranged diagonally to each other in the manner of a crossover (25) in the region of a rack lane (9).

3. Warehouse goods transport device according to claim 1 or 2, characterised in that between the rack lanes (8, 9) are provided double rows (3) made of rows of racks (2, 4) of doubled design, wherein the rack lanes (8, 9) are connected to each other by points connections (18, 20, 25) and a connecting rail (19) extending diagonally through the double row (3).

## Revendications

1. Dispositif transporteur de produits stockés pour transporter à l'aide d'un transtockeur mobile sur rails des produits stockés, comportant des rangées de rayonnages parallèles et des allées de rayonnages (8, 9) disposées entre lesdites rangées, étant précisé que dans la zone des allées de rayonnages (8, 9), il est prévu des aiguilles (18, 20) à l'aide desquelles est réalisée une liaison par rails d'une allée (8) à une allée voisine (9), grâce a un espace libre prévu dans la rangée de rayonnages (2) séparant les allées correspondantes (8, 9), caractérisé en ce que les aiguilles (18, 20) prévues dans la zone des allées de rayonnages correspondantes (8, 9) sont disposées en diagonale l'une en face de l'autre et un rail de liaison d'aiguilles (19) traverse en diagonale l'espace libre (21) prévu dans la rangée de rayonnages (2).

2. Dispositif transporteur de produits stockés selon la revendication 1, caractérisé en ce que les aiguilles sont disposées dans la zone d'une allée de rayonnages (9) en diagonale l'une par rapport à l'autre, à la manière d'une aiguille de croisement (25).

3. Dispositif transporteur de produits stockés selon la revendication 1 ou 2, caractérisé en ce qu'il est prévu, entre les allées de rayonnages (8, 9), des rangées doubles (3) composées de rangées de rayonnages (2, 4) formées en double, étant précisé que les allées de rayonnages (8, 9) sont reliées entre elles par l'intermédiaire de liaisons par aiguilles (18, 20, 25) et d'un rail de liaison (19) traversant en diagonale la rangée double (3).
